# EUROPEAN PATENT APPLICATION

(11) **EP 4 685 271 A2**
(43) Date of publication of application: **28.01.2026**
(21) Application number: 25190706.9
(22) Date of filing: 21.07.2025
(51) Int. Cl.: C25B 1/042, C25B 9/75, C25B 9/77, C25B 15/08

(54) **AN EFFECTIVE SHUTDOWN PURGE SYSTEM AND METHOD FOR ELECTROLYZER STACKS**

(30) Priority: 26.07.2024 US 202463676190 P
(71) Applicant: New Hydrogen IP, LLC, Columbus, Indiana 47201 (US)
(72) Inventor: Hussaini, Irfan Saif, Glenville, 12302 (US); Prabhakaran, Rama Aravind, Malta, 12020 (US); Genter, David P., Columbus, 47201 (US)
(74) Representative: Marks & Clerk Cummins

(57) **Abstract**

An electrolysis system includes an electrolyzer stack, a water source, and a cathode-side purging system. The electrolyzer stack has an anode side and a cathode side. The water source is fluidically coupled to an inlet of the anode side of the electrolyzer stack. The cathode-side purging system is fluidically coupled to a first and second outlet of the cathode side.

## Description

### CROSS-REFEERNCE TO RELATED APPLICATIONS

This nonprovisional applications claims the benefit and priority, under 35 U.S.C. § 119(e) and any other applicable laws or statues, to U.S. Provisional Patent Application Serial No. 63/676190 filed on July 26, 2024, the entire disclosure of which is hereby expressly incorporated herein by reference

### TECHNICAL FIELD

The present disclosure relates to a cathode-side purging system for use in an electrolysis system and methods of using the cathode-side purging system.

### BACKGROUND

Electrochemical cells and electrolytic cells provide chemical reactions that include electricity. For example, a fuel cell uses hydrogen and oxygen to produce electricity. An electrolytic cell uses water and electricity to produce hydrogen and oxygen. An electrolysis system comprises one or more electrolytic cells that utilize electricity to chemically produce substantially pure hydrogen and oxygen from water. When a typical electrolysis system is shut down, residual hydrogen remains in the cathode side of the electrolyzer stack. This residual hydrogen may oxidize the cathode catalyst, which causes accelerated degradation of the electrolyzer stack. Likewise, the residual hydrogen may cross over to the anode side through the membrane, which also oxidizes the anode catalyst. Such oxidation may further cause accelerated degradation of the electrolyzer stack and reduced life of the electrolyzer stack and/or electrolysis system.

The present disclosure is directed to a cathode-side purging system for use in an electrolysis system and methods of using the cathode-side purging system to prolong the presence of, reduce, and/or prevent degradation of the electrolyzer stack and/or one or more components of the electrolysis system.

### SUMMARY

Embodiments of the present disclosure are included to meet these and other needs.

In one aspect described herein, an electrolysis system includes an electrolyzer stack, a water source, and a cathode-side purging system. The electrolyzer stack has an anode side configured to convert water into oxygen gas and hydrogen protons and a cathode side configured to convert the hydrogen protons into hydrogen gas. The water source is fluidically coupled to an inlet of the anode side of the electrolyzer stack to provide the water to the anode side. The cathode-side purging system is configured to be transitioned between an electrolyzer-on state and an electrolyzer-off state. The cathode-side purging system includes a water reservoir, an outlet conduit, and an inlet conduit. The outlet conduit is fluidically coupled between a first outlet and a second outlet of the cathode side and the reservoir. The inlet conduit is fluidically coupled between the reservoir and the second outlet of the cathode side.

In some embodiments, the cathode-side purging system may be configured to collect the water from the cathode side of the electrolyzer stack to provide at least a portion of a stored water in the water reservoir when the cathode-side purging system is in the electrolyzer-on state. In some embodiments, the electrolyzer stack may be positioned above a floor and the cathode-side purging system may be above the electrolyzer stack relative to the floor.

In some embodiments, the water reservoir may be configured to store a volume of a stored water. The volume of the stored water may be at least a holding volume of the cathode side of the electrolyzer stack. In some embodiments, the volume of the stored water may be at least two times the holding volume of the cathode side of the electrolyzer stack.

In some embodiments, the cathode-side purging system may further include a valve coupled to the inlet conduit to selectively direct stored water from the reservoir. The valve may be changeable between a closed configuration in which the stored water is blocked from flowing past the valve and an open configuration in which the stored water can flow past the valve and into the cathode side of the electrolyzer stack. In some embodiments, the valve may be a normally-open control valve that may be configured to automatically change between the closed configuration when the cathode-side purging system is in the electrolyzer-on state and the open configuration when the cathode-side purging system is in electrolyzer-off state.

In some embodiments, the cathode-side purging system may further include a priming conduit fluidically coupled to the reservoir to deliver a priming water to the reservoir to provide at least a portion of a stored water in the reservoir when the cathode-side purging system is in the electrolyzer-off state.

According to a second aspect, described herein, a purging system for an electrolyzer stack includes a reservoir, an inlet conduit, and an outlet conduit. The reservoir is configured to store a volume of stored water. The outlet conduit is fluidically coupled between a first and second outlet of a cathode side of an electrolyzer stack and the reservoir. The inlet conduit is fluidically coupled between the reservoir and the outlet conduit. The inlet conduit has a valve that is changeable from a closed configuration and an open configuration.

In some embodiments, the outlet conduit may include a first segment extending between the first outlet and a meeting point, a second segment extending between the second outlet and the inlet conduit, a third segment extending between the inlet conduit and the meeting point, and a fourth segment extending between the meeting point and the reservoir. In some embodiments, the stored water may flow from the reservoir, into the inlet conduit, into the second segment, and through the second outlet of the cathode side of the electrolyzer stack when the valve is in the open configuration.

In some embodiments, the valve may be a normally-open control valve that is configured to automatically change between the closed configuration when the purging system is an electrolyzer-on state and the open configuration when the purging system is in an electrolyzer-off state. In some embodiments, the purging system may further include a priming conduit fluidically coupled to the reservoir to deliver priming water to the reservoir to provide at least a portion of the stored water. In some embodiments, the volume of the stored water may be at least a holding volume of the cathode side of the electrolyzer stack. In some embodiments, the reservoir may be positioned above a floor and at least the water-distributing conduit and the electrolyzer stack may be located below the reservoir relative to the floor.

According to a third aspect, described herein, a method for reducing degradation of an electrolyzer stack includes operating an electrolyzer stack, positioning a cathode-side purging system above the electrolyzer stack relative to a floor, operating the cathode-side purging system in an electrolyzer-on state, de-energizing the electrolyzer stack, and upon de-energizing the electrolyzer stack, operating the cathode-side purging system in an electrolyzer-off state. The electrolyzer stack is located above a floor and includes an anode side and a cathode side. The anode side provides a crossover water that is directed to the cathode side. The cathode-side purging system includes a reservoir for holding stored water, an outlet conduit fluidically coupled between a first outlet and a second outlet of the cathode side and the reservoir, and an inlet conduit fluidically coupled between the reservoir and the second outlet of the cathode side. In the electrolyzer-on state, hydrogen gas and the crossover water is directed from the cathode side and into the reservoir via the outlet conduit. At least a portion of the stored water is the crossover water.

In some embodiments, the method may further include priming the cathode-side purging system with a priming water to provide the stored water when the cathode-side purging system is in the electrolyzer-off state so that a volume of the stored water is at least a holding volume of the cathode side of the electrolyzer stack when the cathode-side purging system is changed to the electrolyzer-on state. In some embodiments, the volume of the stored water may be at least two times the holding volume of the cathode side of the electrolyzer stack.

In some embodiments, the cathode-side purging system may further include a valve coupled to the inlet conduit to selectively direct the stored water from the reservoir. The valve may be changeable between a closed configuration in which the stored water is blocked from flowing past the valve and an open configuration in which the stored water can flow past the valve and into the cathode side of the electrolyzer stack. In some embodiments, the valve may be a normally-open control valve that is configured automatically change between the closed configuration when the cathode-side purging system is in the electrolyzer-on state and the open configuration when the cathode-side purging system is in the electrolyzer-off state.

According to a fourth aspect, described herein, an electrolysis system includes at least two electrolyzer stacks, a water source, and a cathode-side purging system. Each of the at least two electrolyzer stacks have an anode side configured to convert water into oxygen gas and hydrogen protons and a cathode side configured to convert the hydrogen protons into hydrogen gas. The water source is fluidically coupled to an inlet of the anode side of each of the at least two electrolyzer stacks to provide the water to the anode side. The cathode-side purging system is configured to be transitioned between an electrolyzer-on state and an electrolyzer-off state. The cathode-side purging system includes a water reservoir, a first outlet conduit fluidically coupled between a first outlet and a second outlet of the cathode side of a first electrolyzer stack of the at least two electrolyzer stacks and the reservoir, a second outlet conduit fluidically coupled between a first outlet and a second outlet of the cathode side of a second electrolyzer stack of the at least two electrolyzer stacks and the reservoir, a first inlet conduit fluidically coupled between the reservoir and the second outlet of the cathode side of the first electrolyzer stack, and a second inlet conduit fluidically coupled between the reservoir and the second outlet of the cathode side of the second electrolyzer stack.

In some embodiments, the water reservoir may be configured to store a volume of a stored water. The volume of the stored water may be at least a holding volume of the cathode side of the first electrolyzer stack and a holding volume of the cathode side of the second electrolyzer stack. In some embodiments, the volume of the stored water may be at least two times the holding volume of the cathode side of the first electrolyzer stack and the holding volume of the second electrolyzer stack.

In some embodiments, the cathode-side purging system may further include a first valve coupled to the first inlet conduit and a second valve coupled to the second inlet conduit to selectively direct stored water from the reservoir. The first valve and the second valve may each be changeable between a closed configuration in which the stored water is blocked from flowing past the respective valve and an open configuration in which the stored water can flow past the respective valve and into the respective cathode side of the at least two electrolyzer stacks. In some embodiments, the first valve and the second valve may be each a normally-open control valve that may be configured to automatically change between the closed configuration when the cathode-side purging system is in the electrolyzer-on state and the open configuration when the cathode-side purging system is in electrolyzer-off state. In some embodiments, the cathode-side purging system may be further configured to be transitioned to a partial electrolyzer-off state in which one of the first valve and the second valve is in the closed configuration and the other of the first valve and the second valve is in the open configuration.

### BRIEF DESCRIPTION OF THE DRAWINGS

FIG. 1A is perspective view of an electrolyzer stack according to the present disclosure;
FIG. 1B is a schematic view of an electrolysis system configured to utilize the electrolyzer stack of FIG. 1A;
FIG. 1C is a schematic view of an additional portion of the electrolysis system of FIG. 1B;
FIG. 2A is a schematic view of an electrolysis system having a cathode-side purging system showing that the cathode-side purging system includes a reservoir for storing water, a water-receiving conduit fluidically coupled between a first and second outlet of a cathode side of an electrolyzer stack and the reservoir, and a water-distributing conduit fluidically coupled between the reservoir and the water-receiving conduit;
FIG. 2B is a detailed schematic view of the cathode side purging system and the cathode side of the electrolyzer stack of FIG. 2A
FIG. 3 is a schematic view of the electrolyzer stack of FIG. 2A showing that the electrolyzer stack includes an anode side, a membrane, and a cathode side;
FIG. 4A is a schematic view of the cathode-side purging system of FIG. 2A when the electrolysis system is operating showing that the cathode side of the electrolyzer stack receives hydrogen protons and water from an anode side of the electrolyzer stack, the water-receiving conduit distributes hydrogen gas and water from the cathode side to the reservoir, the reservoir stores a volume of the water and distributes hydrogen gas and excess water from the reservoir, and that the water-distributing conduit includes a valve that is closed to block the volume of water from flowing from the reservoir;
FIG. 4B is a schematic view of the cathode-side purging system of FIG. 2A when the electrolysis system is shutdown showing that the valve of the water-distributing conduit is open to allow the volume of water to flow from the reservoir to the water-receiving conduit and into the second outlet of the cathode side to fill the cathode side with water so that hydrogen gas in the cathode side is displaced out of the first outlet of the cathode side and into at least the water-receiving conduit;
FIG. 5 is a schematic view of another embodiment of a cathode-side purging system for use in an electrolysis system having more than one electrolyzer stack; and
FIG. 6 is a schematic of a control system for use with the electrolysis system of FIG. 2A or FIG. 5.

### DETAILED DESCRIPTION

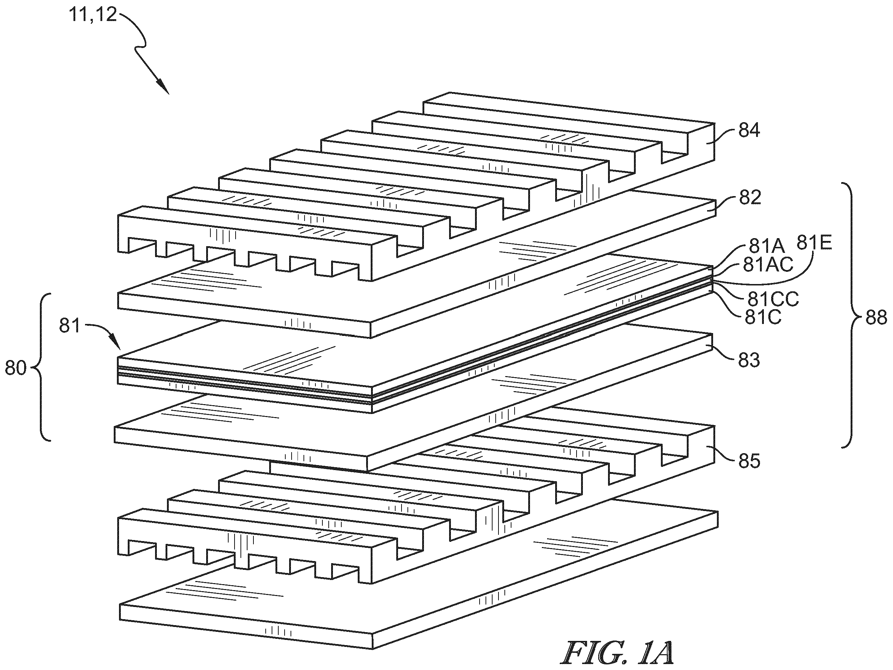

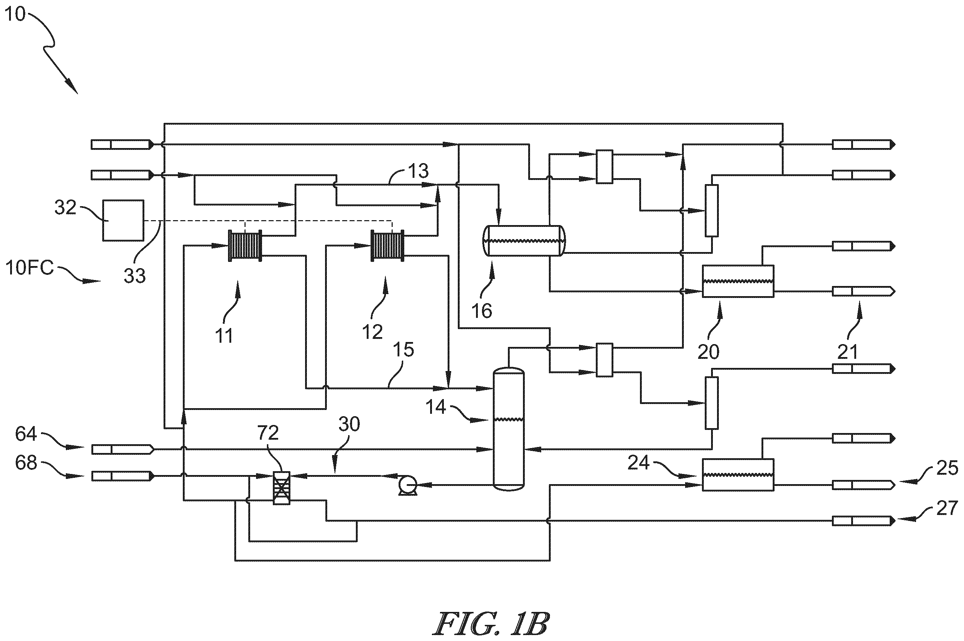

As shown in FIGS. 1A and 1B, electrolysis systems 10 are typically configured to utilize water and electricity to produce hydrogen and oxygen. An electrolysis system 10 typically includes one or more electrolyzer cells 80 that utilize electricity to chemically produce substantially pure hydrogen 13 and oxygen 15 from deionized water 30. Often the electrical source for the electrolysis systems 10 is produced from power or energy generation systems, including renewable energy systems such as wind, solar, hydroelectric, and geothermal sources for the production of green hydrogen. In turn, the pure hydrogen produced by the electrolysis systems 10 is often utilized as a fuel or energy source for those same power generation systems, such as fuel cell systems. Alternatively, the pure hydrogen produced by the electrolysis systems 10 may be stored for later use.

The typical electrolyzer cell 80, or electrolytic cell, is comprised of multiple assemblies compressed and bound into a single assembly, and multiple electrolyzer cells 80 may be stacked relative to each other, along with bipolar plates (BPP) 84, 85 therebetween, to form an electrolyzer stack (for example, electrolyzer stacks 11, 12 in FIG. 1B). Each electrolyzer stack 11, 12 may house a plurality of electrolyzer cells 80 connected together in series and/or in parallel. The number of electrolyzer stacks 11, 12 in the electrolysis systems 10 can vary depending on the amount of power required to meet the power need of any load (e.g., fuel cell stack). The number of electrolyzer cells 80 in an electrolyzer stack 11, 12 can vary depending on the amount of power required to operate the electrolysis systems 10 including the electrolyzer stack 11, 12.

An electrolyzer cell 80 includes a multi-component membrane electrode assembly (MEA) 81 that has an electrolyte 81E, an anode 81A, and a cathode 81C. Typically, the anode 81A, cathode 81C, and electrolyte 81E of the membrane electrode assembly (MEA) 81 are configured in a multi-layer arrangement that enables the electrochemical reaction to produce hydrogen and/or oxygen via contact of the water with one or more gas diffusion layers 82, 83. The gas diffusion layers (GDL) 82, 83, which may also be referred to as porous transport layers (PTL), are typically located on one or both sides of the MEA 81. Bipolar plates (BPP) 84, 85 often reside on either side of the GDLs and separate the individual electrolyzer cells 80 of the electrolyzer stack 11, 12 from one another. One bipolar plate 85 and the adjacent gas diffusion layers 82, 83 and MEA 81 can form a repeating unit 88.

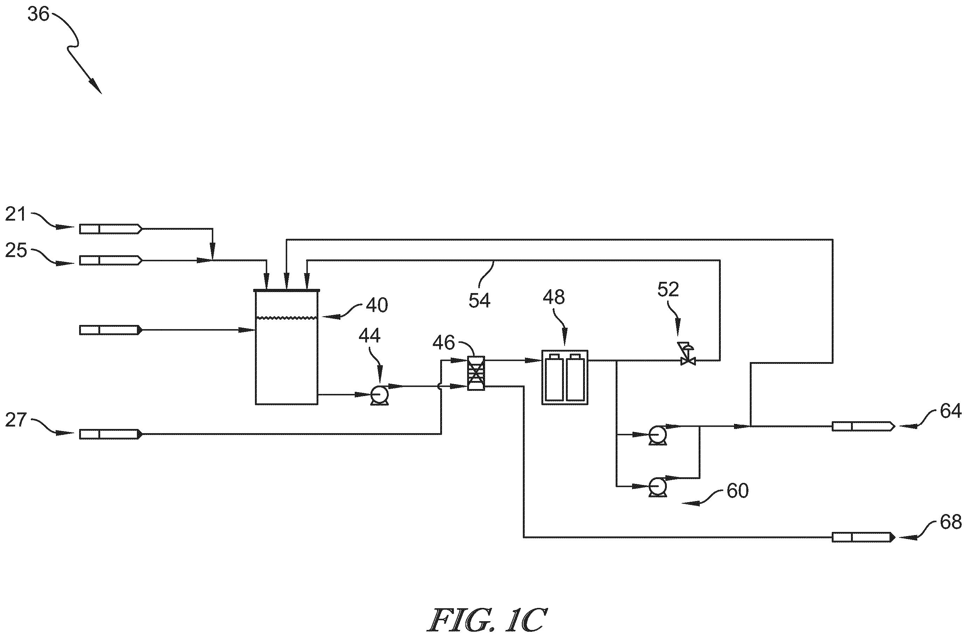

As shown in FIGS. 1B and 1C, an exemplary electrolysis system 10 can include two electrolyzer stacks 11, 12 and a fluidic circuit 10FC including the various fluidic pathways shown in FIGS. 1B and 1C that is configured to circulate, inject, and purge fluid and other components to and from the electrolysis systems 10. A person skilled in the art would understand that one or a variety of a number of components within the fluidic circuit 10FC, as well as more or less than two electrolyzer stacks 11, 12, may be utilized in the electrolysis systems 10. For example, the electrolysis systems 10 may include one electrolyzer stack 11, and in other examples, the electrolysis systems 10 may include three or more electrolyzer stacks.

The electrolysis systems 10 may include one or more types of electrolyzer stacks 11, 12 therein. In the illustrated embodiment, a polymer electrolyte membrane (PEM) electrolyzer cell 80 may be utilized in the stacks 11, 12. A PEM electrolyzer cell 80 typically operates at about 4°C to about 150°C, including any specific or range of temperatures comprised therein. A PEM electrolyzer cell 80 also typically functions at about 100 bar or less, but can go up to about 1000 bar (including any specific or range of pressures comprised therein), which reduces the total energy demand of the system. A standard electrochemical reaction that occurs in a PEM electrolyzer cell 80 to produce hydrogen is as follows.
- Anode: 2H₂O → O₂ + 4H⁺ + 4e⁻
- Cathode: 4H⁺ + 4e⁻ → 2H₂
- Overall: 2H₂O (liquid) → 2H₂ + O₂

Additionally, a solid oxide electrolyzer cell 80 may be utilized in the electrolysis systems 10. A solid oxide electrolyzer cell 80 will function at about 500°C to about 1000°C, including any specific or range of temperatures comprised therein. A standard electrochemical reaction that occurs in a solid oxide electrolyzer cell 80 to produce hydrogen is as follows.
- Anode: 2O²⁻ → O₂ + 4e⁻
- Cathode: 2H₂O → 4e⁻ + 2H₂ + 2O²⁻
- Overall: 2H₂O (liquid) → 2H₂ + O₂

Moreover, an AEM electrolyzer cell 80 may be utilized. An exemplary AEM electrolyzer cell 80 is an alkaline electrolyzer cell 80. Alkaline electrolyzer cells 80 comprise aqueous solutions, such as potassium hydroxide (KOH) and/or sodium hydroxide (NaOH), as the electrolyte. Alkaline electrolyzer cells 80 typically perform at operating temperatures ranging from about 0°C to about 150°C, including any specific or range of temperatures comprised therein. Alkaline electrolyzer cell 80 generally operates at pressures ranging from about 1 bar to about 100 bar, including any specific or range of pressures comprised therein. A typical hydrogen-generating electrochemical reaction that occurs in an alkaline electrolyzer cell 80 is as follows.
- Anode: 4OH⁻ → O₂ + 2H₂O + 4e⁻
- Cathode: 4H₂O + 4e⁻ → 2H₂ + 4OH⁻
- Overall: 2 H₂O 2H₂ + O₂

As shown in FIG. 1B, the electrolyzer stacks 11, 12 include one or more electrolyzer cells 80 that utilize electricity to chemically produce substantially pure hydrogen and oxygen from water. In turn, the pure hydrogen produced by the electrolyzer may be utilized as a fuel or energy source. As shown in FIG. 1B, the electrolyzer stack 11, 12 outputs the produced hydrogen along a fluidic connecting line 13 to a hydrogen separator 16 and also outputs the produced oxygen along a fluidic connecting line 15 to an oxygen separator 14.

The hydrogen separator 16 may be configured to output pure hydrogen gas and also send additional output fluid to a hydrogen drain tank 20, which then outputs fluid to a deionized water drain 21. The oxygen separator 14 may output fluid to an oxygen drain tank 24, which in turn outputs fluid to a deionized water drain 25. A person skilled in the art would understand that certain inputs and outputs of fluid may be pure water or other fluids such as coolant or byproducts of the chemical reactions of the electrolyzer stacks 11, 12. For example, oxygen and hydrogen may flow away from the cell stacks 11, 12 to the respective separators 14, 16. The system 10 may further include a rectifier 32 configured to convert electricity 33 flowing to the cell stacks 11, 12 from alternating current (AC) to direct current (DC).

The deionized water drains 21, 25 each output to a deionized water tank 40, which is part of a polishing loop 36 of the fluidic circuit 10FC, as shown in FIG. 1C. Water with ion content can damage electrolyzer stacks 11, 12 when the ionized water interacts with internal components of the electrolyzer stacks 11, 12. The polishing loop 36, shown in greater detail in FIG. 1C, is configured to deionize the water such that it may be utilized in the cell stacks 11, 12 and not damage the cell stacks 11, 12.

In the illustrated embodiment, the deionized water tank 40 outputs fluid, in particular water, to a deionized water polishing pump 44. The deionized water polishing pump 44 in turn outputs the water to a water polishing heat exchanger 46 for polishing and treatment. The water then flows to a deionized water resin tank 48.

Coolant is directed through the electrolysis systems 10, in particular through a deionized water heat exchanger 72 that is fluidically connected to the oxygen separator 14. The coolant used to cool said water may also be subsequently fed to the water polishing heat exchanger 46 via a coolant input 27 for polishing. The coolant is then output back to the deionized water heat exchanger 72 for cooling the water therein.

After the water is output from the deionized water polishing heat exchanger 46 and subsequently to the deionized water resin tank 48, a portion of the water may be fed to deionized water high pressure feed pumps 60. Another portion of the water may be fed to a deionized water pressure control valve 52, as shown in FIG. 1C. The portion of the water that is fed to the deionized water pressure control valve 52 flows through a recirculation fluidic connection 154 that allows the water to flow back to the deionized water tank 40 for continued polishing.

In some embodiments, the electrolysis systems 10 may increase deionized water skid for polishing water flow to flush out ions within the water at a faster rate. The portion of the water that is fed to the deionized water high pressure feed pumps 60 is then output to a deionized water feed 64, which then flows into the oxygen separator 14 for recirculation and eventual reusage in the electrolyzer stacks 11, 12. This process may then continuously repeat.

The electrolysis systems 10 described herein, may be used in stationary and/or immovable power systems, such as industrial applications and power generation plants. The electrolysis systems 10 may also be implemented in conjunction with other electrolysis systems 10.

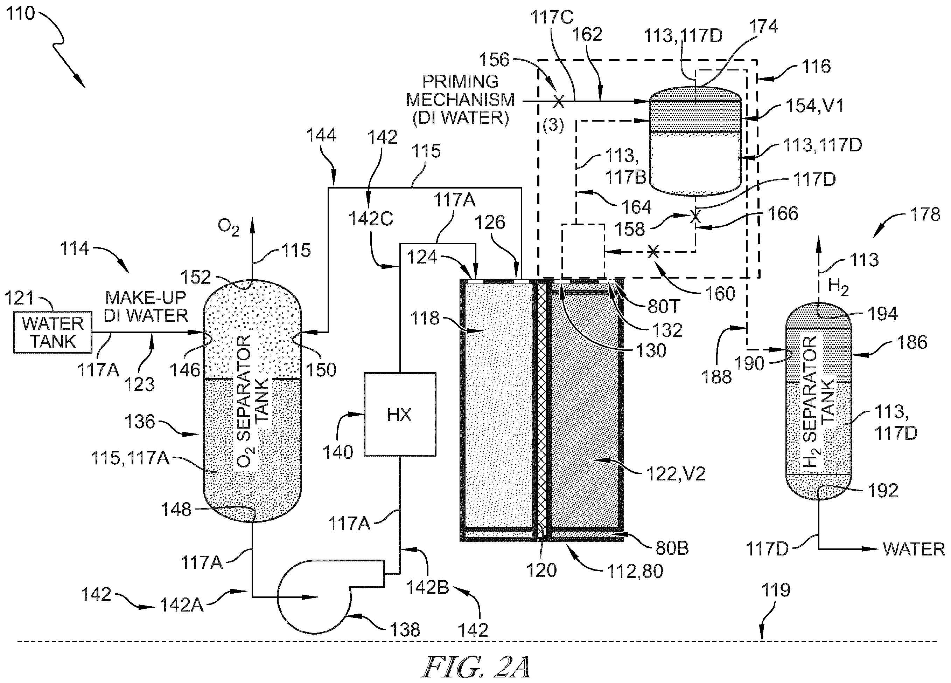

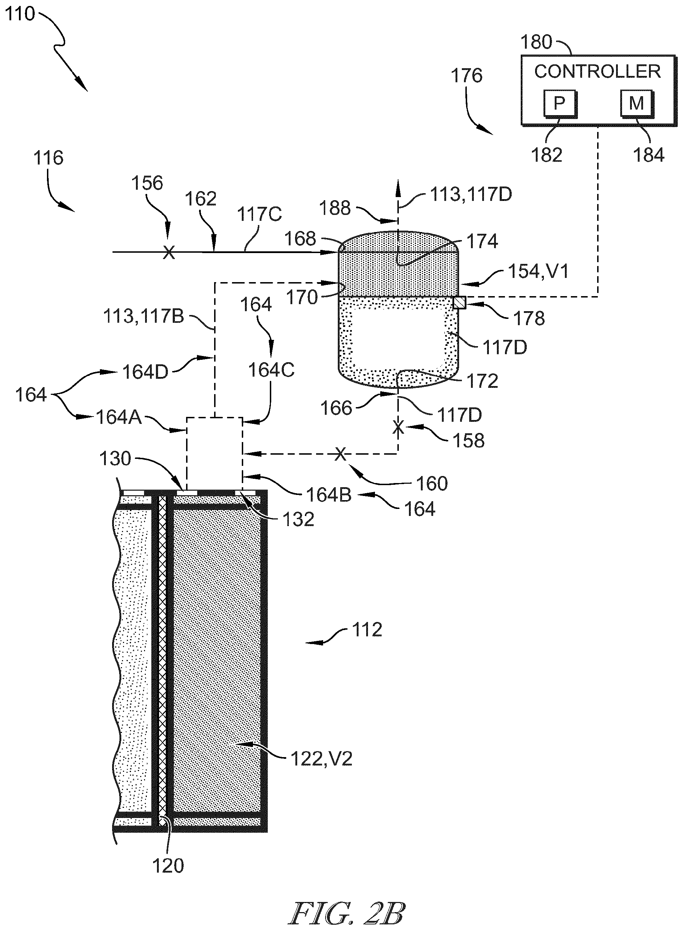

The present disclosure provides a cathode-side purging system 116 for use in an electrolysis system 110, as shown in FIGS. 2A and 2B. The cathode-side purging system 116 is configured to prolong the presence of, reduce, and/or prevent degradation of an electrolyzer stack 112 of the electrolysis system 110 by displacing hydrogen gas 113 from a cathode side 122 of the electrolyzer stack 112 with stored-deionized water 117D upon shutdown of the electrolysis system 110. The cathode-side purging system 116 is located above the electrolyzer stack 112 of the electrolysis system 110 such that, upon shutdown of the electrolysis system 110, the stored-deionized water 117D is directed to the cathode side 122 of the electrolyzer stack 112 by gravity. In other words, the cathode-side purging system 116 may be operable with few or no controls being operable upon shutdown of the electrolysis system 110. Shutdown of the electrolysis system 110 may be a typical shutdown, an emergency stop, or any other nonfunctional or inoperable state where the electrolysis system 110 has no power and/or the electrolyzer stack 112 is de-energized.

The electrolysis system 110 of the present disclosure may be the electrolysis system 10 shown in FIGS. 1A-1C. However, a person of ordinary skill in the art would appreciate that the cathode-side purging system 116 may be incorporated into any electrolysis system where it is desired to prolong the presence of, reduce, and/or prevent degradation of the electrolyzer stack 112. The electrolyzer stack 112 of FIGS. 2A and 2B may operate the same or similar to the electrolyzer stacks 11, 12 of FIGS. 1A-1C. However, a person of ordinary skill in the art would appreciate that the cathode-side purging system 116 of the present disclosure may be used with any electrolyzer stack, particularly where it is desired to prolong the presence of, reduce, and/or prevent degradation of the electrolyzer stack. The electrolyzer stack 112 extends upwardly away from a floor 119 and in one embodiment, at least the cathode-side purging system 116 is arranged above the electrolyzer stack 112. In other embodiments, the cathode-side purging system 116 may be arranged below or at the same level as the electrolyzer stack 112.

Referring to FIGS. 2A and 2B, the electrolysis system 110 includes a water source 114, the electrolyzer stack 112, and/or the cathode-side purging system 116. The water source 114 provides deionized water 117A to the electrolyzer stack 112. The electrolyzer stack 112 utilizes electricity to chemically produce substantially pure hydrogen gas 113 and oxygen gas 115 from the deionized water 117A. The cathode-side purging system 116 collects the hydrogen gas 113 and crossover-deionized water 117B from the cathode side 122 of the electrolyzer stack 112. Upon shutdown of the electrolysis system 110, the stored-deionized water 117D, which may include at least some of the crossover-deionized water 117B, is distributed from the cathode-side purging system 116 to the cathode side 122 of the electrolyzer stack 112 to displace hydrogen gas 113 from the cathode 122 of the electrolyzer stack 112.

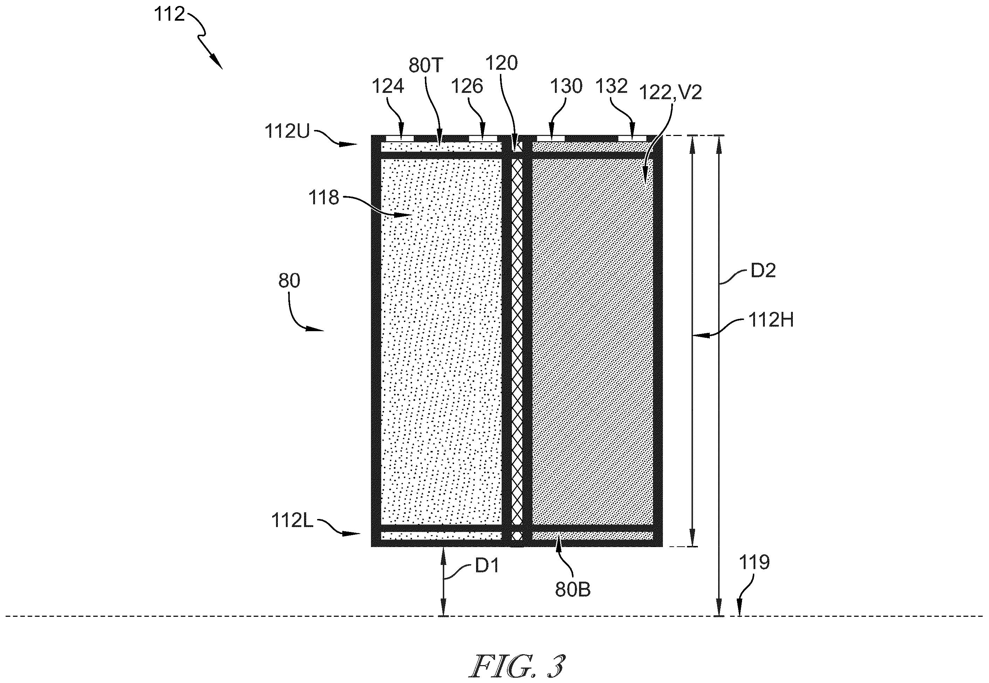

The electrolyzer stack 112 comprises a plurality of electrolyzer cells 80, as shown in FIG. 3. In the illustrative embodiment, the plurality of electrolyzer cells 80 are the electrolyzer cells 80 described above and as shown in FIG. 1A. However, a person of ordinary skill in the art would appreciate that the electrolyzer stack 112 may comprise other types of electrolyzer cells. The electrolyzer stack 112 may comprise a total number of 424 electrolyzer cells 80, less than 424 electrolyzer cells 80, or more than 424 electrolyzer cells 80. In other embodiments, the electrolyzer stack 112 may comprise between about 100 electrolyzer cells 80 and about 500 electrolyzer cells 80, including any specific number or range of electrolyzer cells 80 comprised therein.

The electrolyzer stack 112 extends between a lower end 112L and an upper end 112U to define a height 112H of the electrolyzer stack, as shown in FIG. 3. The height 112H may be about 3 feet, less than 3 feet, or more than 3 feet. In other embodiments, the height 112H may be between about 1 foot and about 4 feet, including any specific height or range of heights comprised therein. The lower end 112L may be positioned at a first distance D1 from the floor 119 and the upper end 112U may be positioned at a second distance D2 from the floor 119. The second D2 is greater than the first distance D1. In some embodiments, the first distance D1 may be between about 0 inches and about 24 inches, including any specific distance or range of distances comprised therein.

The plurality of electrolyzer cells 80 of the electrolyzer stack 112 are arranged and/or configured between the upper end 112U and the lower end 112L of the electrolyzer stack 112 to define the anode side 118, a membrane 120, and the cathode side 122 of the electrolyzer stack 112, as shown in FIG. 3. In other words, the gas diffusion layer 82, the anode 81A, and an anode catalyst 81AC of each electrolyzer cell 80 (shown in FIG. 1A) in the electrolyzer stack 112 cooperate and/or are configured to define the anode side 118 of the electrolyzer stack 112 (shown in FIG. 3).

Similarly, the electrolyte 81E of each electrolyzer cell 80 (shown in FIG. 1A) cooperate and/or are configured to define the membrane 120 of the electrolyzer stack 112 (shown in FIG. 3). Likewise, a cathode catalyst 81CC, the cathode 81C, and the gas diffusion layer 83 of each electrolyzer cell 80 (shown in FIG. 1A) cooperate and/or are configured to define the cathode side 122 of the electrolyzer stack 112(shown in FIG. 3). The plurality of electrolyzer cells 80 include a top electrolyzer cell 80T located at the upper end 112U of the electrolyzer stack 112 and a bottom electrolyzer cell 80B located at the lower end 112L of the electrolyzer stack 112. The remaining electrolyzer cells 80 of the plurality of electrolyzer cells 80 are arranged between the top electrolyzer cell 80T and the bottom electrolyzer cell 80B.

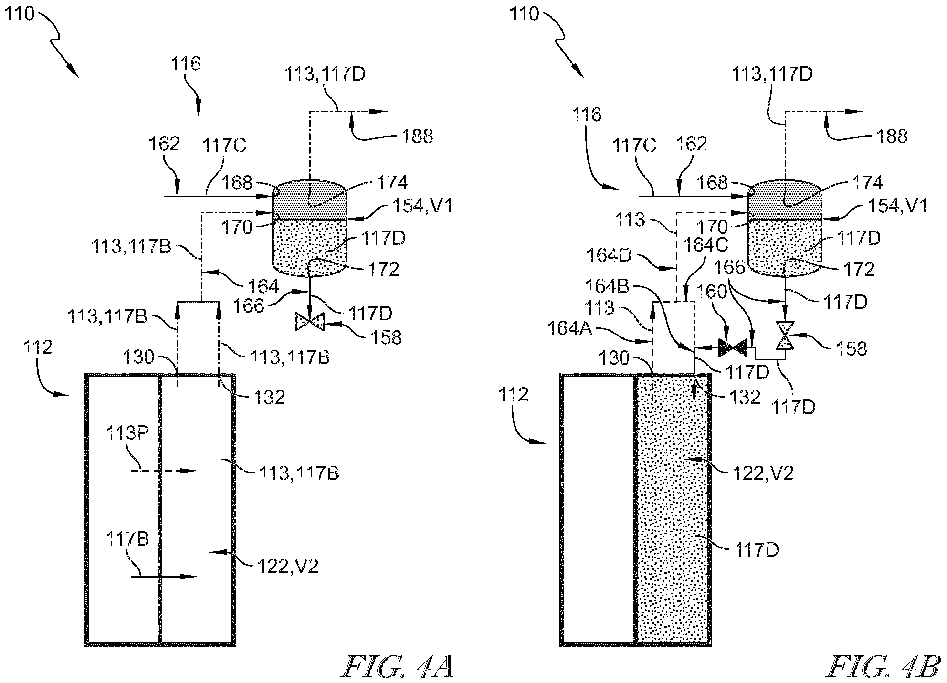

The anode side 118 extends between the upper end 112U and the lower end 112L of the electrolyzer stack 112 and is configured to convert deionized water 117A into oxygen gas 115 and hydrogen protons 113P with the anode catalyst 81AC, as shown in FIGS. 2A-4A. The membrane 120 also extends between the upper end 112U and the lower end 112L. The hydrogen protons 113P move laterally across the membrane 120 and into the cathode side 122 as shown in FIG. 4A. The cathode side 122 extends between the upper end 112U and the lower end 112L of the electrolyzer stack 112 and is configured to convert the hydrogen protons 113P into hydrogen gas 113 with the cathode catalyst 81CC (shown in FIG. 1A). During this process, crossover-deionized water 117B, which was not converted into oxygen gas 115, is drawn through the membrane 120 and into the cathode side 122.

The anode side 118 is formed to include an inlet 124 and an outlet 126, as shown in FIGS. 2A-3. The inlet 124 is fluidically coupled to the water source 114 to receive deionized water 117A from the water source 114. In the present disclosure, the outlet 126 is fluidically coupled to the water source 114 to distribute oxygen gas 115 from the anode 118 to other components of the electrolysis system 110. In other embodiments, the outlet 126 may not be fluidically coupled to the water source 114 and instead may be coupled to other components of the electrolysis system 110 to receive the oxygen gas 115 from the anode 118.

The cathode side 122 is formed to include a first outlet 130 and a second outlet 132 as shown in FIGS. 2A-3. The first outlet 130 and the second outlet 132 are fluidically coupled to the cathode-side purging system 116. When the electrolysis system 110 is operating, the first outlet 130 and the second outlet 132 distribute hydrogen gas 113 and crossover-deionized water 117B from the cathode side 122 of the electrolyzer stack 112 to the cathode-side purging system 116. When the electrolysis system 110 is shut down, the second outlet 132 receives the stored-deionized water 117D from the cathode-side purging system 116. The stored-deionized water 117D displaces (i.e. "pushes") leftover hydrogen gas 113 out of the first outlet 130 to the cathode-side purging system 116. In some embodiments, the cathode side 122 may have more than two outlets 130, 132. In such embodiments, the additional outlets may be fluidically coupled to the cathode-side purging system 116 or fluidically coupled directly to a hydrogen separator tank 186.

In the illustrated embodiment shown in FIG. 2A, the water source 114 includes an oxygen separator tank 136, a pump 138, a heat exchanger 140, a water conduit 142, and/or an oxygen conduit 144. A water tank 121 holding deionized water 117A may be fluidically coupling to the oxygen separator tank 136 by a conduit 123. In other embodiments, a person of ordinary skill in the art would appreciate that the water source 114 may include the water tank 121 holding deionized water 117A and the conduit 123 fluidically coupling the water tank 121 and the anode side 118 of the electrolyzer stack 112. In other words, the water source 114 may be any means or component known in the art to deliver deionized water 117A from the water reservoir 121 to the anode side 118 of the electrolyzer stack 112. In some embodiments, the water source 114 may only be the water tank 121 and the conduit 123. A person of ordinary skill in the art would appreciate that the water source 114 may be the deionized water feed 64 shown and described with reference to FIGS. 1B and 1C and/or the polishing loop 36 and its components (e.g. drains 21, 25, tank 40, hydrogen drain tank 20, oxygen drain tank 24, deionized water resin tank 48) shown and described with reference to FIGS. 1B and 1C.

The oxygen separator tank 136 collects, holds, and/or distributes oxygen gas 115 and deionized water 117A throughout the electrolysis system 110, as shown in FIG. 2A. The oxygen separator tank 136 is formed to include a water inlet 146, a water outlet 148, an oxygen inlet 150, and/or an oxygen outlet 152. The water inlet 146 is configured to direct deionized water 117A from other components of the electrolysis system 110 into the oxygen separator tank 136. The water outlet 148 is fluidically coupled to the pump 138 via a first segment 142A of the water conduit 142 to direct deionized water 117A from the oxygen separator tank 136 to the pump 138.

The oxygen inlet 150 is fluidically coupled to the outlet 126 of the anode side 118 via the oxygen conduit 144 to direct oxygen gas 115 from the anode side 118 to the oxygen separator tank 136. The oxygen outlet 152 is configured to direct oxygen gas 115 from the oxygen separator tank 136 to other components of the electrolysis system 110.

The pump 138 is fluidically coupled between the oxygen separator tank 136 and the heat exchanger 140, as shown in FIG. 2A. The pump 138 is configured to pump deionized water 117A received from the oxygen separator tank 136 via the first segment 142A of the water conduit 142 towards the heat exchanger 140 via a second segment 142B of the water conduit 142.

The heat exchanger 140 is fluidically coupled between the pump 138 and the inlet 124 of the anode side 118, as shown in FIG. 2A. The heat exchanger 140 is configured to heat or cool the deionized water 117A received from the pump 138 via the second segment 142B of the water conduit 142 to a desired temperature. For example, the desired temperature may be between about 20°C to about 70°C (e.g. electrolyzer stack operational temperatures), including any specific temperature or range of temperatures comprised therein. In another embodiment, the desired temperature may be between about 4°C to about 70°C, including any specific temperature or range of temperatures comprised therein. The heat exchanger 140 is further configured to distribute the deionized water 117A to the inlet 124 of the anode side 118 via a third segment 142C of the water conduit 142. In other embodiments, the water source 114 may not include the pump 138 and/or the heat exchanger 140.

The cathode-side purging system 116 includes a reservoir 154, a priming conduit 162, a cathode-outlet conduit 164, a cathode-inlet conduit 166, and/or a first cathode-side valve 158, as shown in FIGS. 2A and 2B. The priming conduit 162 selectively delivers priming-deionized water 117C to the reservoir 154. The cathode-outlet conduit 164 includes a first segment 164A, a second segment 164B, a third segment 164C, and a fourth segment 164D.

The first segment 164A fluidically couples the first outlet 130 of the cathode side 122 to the fourth segment 164D. The second segment 164B fluidically couples the second outlet 132 of the cathode side 122 to the third segment 164C and the cathode-inlet conduit 166. The third segment 164C fluidically couples the second segment 164B to the fourth segment 164D. The fourth segment 164D fluidically couples the first segment 164A and the third segment 164C to the reservoir 154.

The cathode-inlet conduit 166 fluidically couples the reservoir 154 to the second segment 164B to selectively deliver stored-deionized water 117D to the cathode side 122 of the electrolyzer stack 112. The cathode-outlet conduit 164 may also be referred to as a water-receiving conduit 164. The cathode-inlet conduit 166 may also be referred to as a water-distributing conduit 166.

As such, the cathode-side purging system 116 is changeable between an electrolyzer-on state and an electrolyzer-off state. The electrolyzer-on state is a state in which hydrogen gas 113 and crossover-deionized water 117B is directed into the reservoir 154 from the cathode side 122 of the electrolyzer stack 112, as suggested in FIG. 4A. The electrolyzer-off state is a state in which stored-deionized water 117D is directed from the reservoir 154 into the cathode side 122 of the electrolyzer stack 112 to fill the cathode side 122 with stored-deionized water 117D and displace hydrogen gas 113 from the cathode side 122, as suggested in FIG. 4B.

In other words, the cathode-side purging system 116 may be configured to protect the cathode catalyst 81CC and/or the anode catalyst 81AC from exposure to hydrogen gas 113 when the electrolyzer stack 112 is not energized (i.e., when the cathode-side purging system 116 is in the electrolyzer-off state). The cathode-side purging system 116 may also be configured to fill the cathode side 122 with stored-deionized water 117D as soon as or shortly after the electrolyzer stack 112 is de-energized, powered off, and/or shutdown to minimize redox degradation of the cathode catalyst 81CC and/or anode catalyst 81AC.

Additionally, the cathode-side purging system 116 allows for the electrolyzer stack 112 to be de-energized when the cathode side 122 has high pressure or both the cathode side 122 and the anode side 118 have high pressure. For example, high pressure of the cathode side 122, or both the cathode side 122 and the anode side 118, may be between about 10 bar and about 50 bar, including any specific pressure or range of pressures comprised therein. In some embodiments, the high pressure on the cathode side 122 and the anode side 118 are the same or substantially similar. In other embodiments, the high pressure on the cathode side 122 may be about 3 bar to about 10 bar (e.g., about 5 bar) above the high pressure on the anode side 118.

The cathode-side purging system 116 is further configured to prevent hydrogen gas 113 from contacting the cathode catalyst layer 81CC by filling the cathode side 122 with water 117D when the electrolyzer stack 112 is deenergized or powered off. The water 117D on the cathode side 122 when the electrolyzer stack 112 is deenergized also greatly reduces the amount of hydrogen gas 113 that crosses over to the anode side 118. For example, the amount may be at or near no hydrogen gas 113. Absence of hydrogen gas 113 on the anode side 118 when the electrolyzer stack 112 is deenergized further minimizes subsequent operating concerns.

The reservoir 154 is formed to include a priming inlet 168, a cathode inlet 170, a cathode outlet 172, and/or a hydrogen outlet 174, as shown in FIG. 2B. The priming inlet 168 is fluidically coupled to other components of the electrolysis system 110 to direct priming-deionized water 117C from other components of the electrolysis system 110 into the reservoir 154 via the priming conduit 162. The cathode inlet 170 is fluidically coupled to the outlets 130, 132 of the cathode side 122 of the electrolyzer stack 112 to direct hydrogen gas 113 and crossover-deionized water 117B from the cathode side 122 into the reservoir 154 via the cathode-outlet conduit 164 when the cathode-side purging system 116 is in the electrolyzer-on state. The cathode outlet 172 is fluidically coupled to the second segment 164B of the cathode-outlet conduit 164 via the cathode-inlet conduit 166 to direct stored-deionized water 117D from the reservoir 154 to the cathode side 122 of the electrolyzer cell 112 when the cathode-side purging system 116 is in the electrolyzer-off state. The hydrogen outlet 174 is configured to direct hydrogen gas 113 from the reservoir 154 to other components of the electrolysis system 110.

The reservoir 154 is configured to hold a volume V1 of stored-deionized water 117D in the reservoir 154, as shown in FIGS. 2A-2B. The stored-deionized water 117D may comprise the priming-deionized water 117C, the crossover-deionized water 117B, or a combination of both 117C, 117B, as described in further detail below. The volume V1 of stored-deionized water 117D is at least a holding volume V2 of the cathode side 122 of the electrolyzer cell 112. In other words, when the volume V1 of stored-deionized water 117D is distributed to the cathode side 122, and the cathode-side purging system 116 is in the electrolyzer-off state, the cathode side 122 is completely filled with the stored-deionized water 117D, as suggested in FIG. 4B. Completely filling the cathode side 122 with the stored-deionized water 117D when the cathode-purging system 116 is in the electrolyzer-off state forces (i.e. "pushes") hydrogen gas 113 out of the cathode side 122 and into the cathode-side purging system 116, such as the cathode-outlet conduit 164 and/or the reservoir 154.

In some embodiments, the volume V1 of stored-deionized water 117D held in the reservoir 154 may be the holding volume V2 of the cathode side 122, double the holding volume V2 of the cathode side 122, and/or up to ten times (10x) the holding volume V2 of the cathode side 122. For example, if the cathode side 122 has a holding volume V2 of 25 liters, then the volume V1 of the stored-deionized water 117D may be about 25 to about 250 liters, including any specific volume or range of volumes comprised therein. In some embodiments, the volume V1 of the stored-deionized water 117D may be about 25 to about 30 liters, about 50 to about 55 liters, or up to about 250 to about 275 liters, including any specific volume or range of volumes comprised therein. In other embodiments, the volume V1 of the stored-deionized water is at least 25 liters. In some embodiments, the volume V1 of the stored-deionized water 117D may be between about 25 liters and about 275 liters, including any specific volume or range of volumes comprised therein.

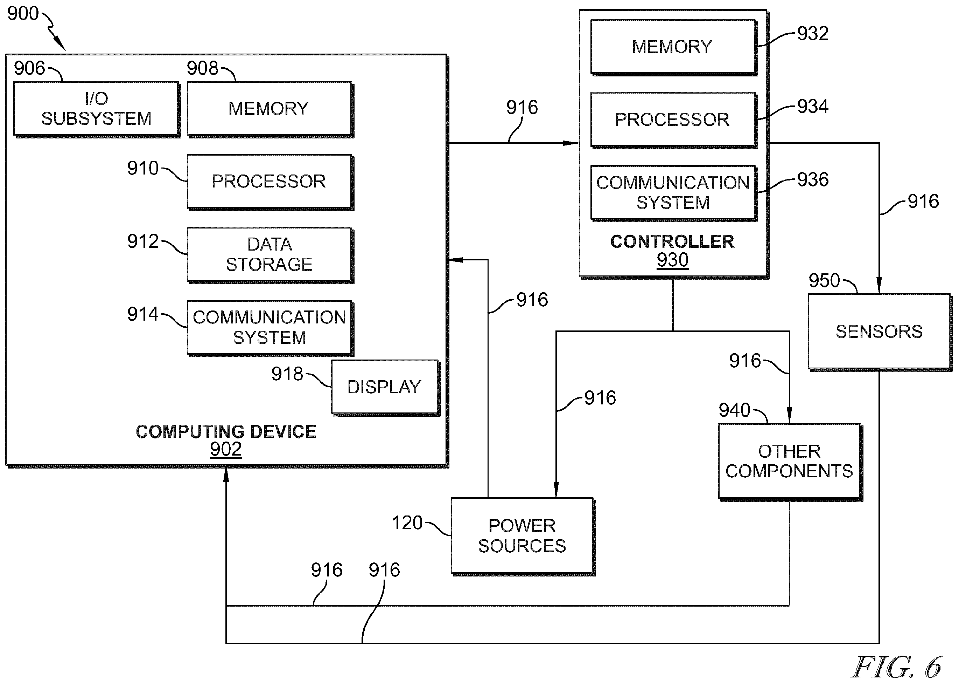

The reservoir 154 may be sized such that a level sensor is not required for the cathode-side purging system 116. However, in some embodiments, the cathode-side purging system 116 may further include a control system 176. The control system 176 may include a level sensor 178 and a controller 180 to determine whether the volume V1 of stored-deionized water 117D is a minimum volume, as shown in FIG. 2B. Alternatively, the control system 176 may be implemented as a control system 900 as described in further detail below with reference to FIG. 6.

The level sensor 178 is coupled to the reservoir 154 and configured to detect the volume of stored-deionized water 117D in the reservoir 154. The controller 180 includes a processor 182 and a memory 184 storing instructions to, when executed by the processor 182, compare the detected volume V1 of stored-deionized water 117D with a minimum volume. If the detected volume V1 is greater than the minimum volume, then the reservoir 154 may not receive priming-deionized water 117C and instead may be filled with the crossover-deionized water 117B as the electrolysis system 110 operates. If the detected volume V1 is less than the minimum volume, then the reservoir 154 may receive or continue to receive priming-deionized water 117C with the crossover-deionized water 117B until the minimum volume is reached. The minimum volume may be the holding volume V2 of the cathode side 122, as described above.

The first cathode-side valve 158 is coupled to the cathode-inlet conduit 166 and is changeable between an open configuration and a closed configuration, as shown in FIGS 2A and 2B. When the first cathode-side valve 158 is in the closed configuration, stored-deionized water 117D is blocked from flowing past the first cathode-side valve 158 and into the second segment 164B of the cathode-outlet conduit 164, as suggested in FIG. 4A. When the first cathode-side valve 158 is in the open configuration, stored-deionized water 117D flows past the first cathode-side valve 158, into the second segment 164B of the cathode-outlet conduit 164 and into the second outlet 132 to fill the cathode side 122, as suggested in FIG. 4B. The first cathode-side valve 158 is a normally-open control valve such that upon shutdown of the electrolysis system 110, the first cathode-side valve 158 automatically changes to the open configuration to fill the cathode side 122 with stored-deionized water 117D. As such, the cathode-side purging system 116 is a passive system, which automatically fills the cathode side 122 with water when the electrolysis system 110 has no power. Such a passive system protects the electrolyzer stack 112 and its components, such as the catalysts 81AC, 81CC, by displacing hydrogen gas 113 from the cathode side 122.

The cathode-side purging system 116 may further include a priming valve 156 and/or a second cathode-side valve 160 to control the flow of the priming-deionized water 117C and the stored-deionized water 117D, respectively, as shown in FIGS. 2A and 2B. The priming valve 156 is coupled to the priming conduit 162 and is changeable between an open configuration and a closed configuration. The second cathode-side valve 160 is coupled to the cathode-inlet conduit 166 and is changeable between an open configuration and a closed configuration.

When the priming valve 156 is in the open configuration, priming-deionized water 117C flows from other components of the electrolysis system 110, through the priming conduit 162, and into the reservoir 154 via the priming inlet 168, as shown in FIGS. 2A and 2B. For example, other components of the electrolysis system 110 may include, but are not limited to, the deionized water feed 64 shown and described with reference to FIGS. 1B and 1C and/or the polishing loop 36 and its components (e.g. drains 21, 25, tank 40, hydrogen drain tank 20, oxygen drain tank 24, deionized water resin tank 48) shown and described with reference to FIGS. 1B and 1C. In some embodiments, other components of the electrolysis system 110 may include the water tank 121. When the priming valve 156 is in the closed configuration, priming-deionized water 117C is blocked by the priming valve 156 from entering the reservoir 154. The priming valve 156 may be a manual valve or an automatic valve.

In embodiments where the priming valve 156 is an automatic valve and the cathode-side purging system 116 includes the control system 176, the memory 184 of the control system 176 may further store instructions, which are executed by the processor 182 of the control system 176, as shown in FIG. 2B. For example, when the detected volume V1 is less than the minimum volume, the processor 182 is configured to enable the priming valve 156 to be opened. Alternatively, when the detected volume V1 is at or greater than the minimum volume, then the processor 182 is configured to enable the priming valve 156 to be closed.

When the second cathode-side valve 160 is in the closed configuration, stored-deionized water 117D is blocked from flowing past the second cathode-side valve 160 and into the second segment 164B of the cathode-outlet conduit 164. When the second cathode-side valve 160 is in the open configuration, stored-deionized water 117D flows past the second cathode-side valve 160, into the second segment 164B of the cathode-outlet conduit 164 and into the second outlet 132 to fill the cathode side 122, as shown in FIG. 4B.

In one embodiment, the second cathode-side valve 160 is a hand-valve 160, as shown in FIG. 4B. As such, the second cathode-side valve 160 is typically in an open configuration and may be manually, automatically, and/or electronically changed to a closed configuration to isolate the reservoir 154 from the electrolyzer stack 112. For example, this change to the closed configuration may occur when the electrolyzer stack 112 is being serviced. In other embodiments, the second cathode-side valve 160 is not a hand-valve.

The electrolysis system 110 may further includes a hydrogen collector 178, as shown in FIG. 2A. The hydrogen collector 178 includes the hydrogen separator tank 186 and/or a hydrogen conduit 188. The hydrogen separator tank 186 collects, holds, and/or distributes hydrogen gas 113 and deionized water 117D throughout the electrolysis system 110. The hydrogen conduit 188 is coupled between the hydrogen outlet 174 of the reservoir 154 and the hydrogen separator tank 186 to direct hydrogen gas 113 and/or deionized water 117D from the reservoir 154 and into the hydrogen separator tank 186.

The hydrogen separator tank 186 is formed to include an inlet 190, a water outlet 192, and/or a hydrogen outlet 194, as shown in FIG. 2A. The inlet 190 is fluidically coupled to the reservoir 154 via the hydrogen conduit 188 to receive hydrogen gas 113 and/or deionized water 117D. The water outlet 192 is configured to direct deionized water 117D to other components of the electrolysis system 110. For example, other components of the electrolysis system 110 may include, but is not limited to, the deionized water feed 64 shown and described with reference to FIGS. 1B and 1C and/or the polishing loop 36 and its components (e.g. drains 21, 25, tank 40, hydrogen drain tank 20, oxygen drain tank 24, deionized water resin tank 48) shown and described with reference to FIGS. 1B and 1C.

In some embodiments, other components of the electrolysis system 110 may include the water tank 121, as shown in FIG. 2A. The hydrogen outlet 194 is configured to direct hydrogen gas 113 to other components of the electrolysis system 110. For example, other components of the electrolysis system 110 may include, but is not limited to, the hydrogen separator and/or the hydrogen drain tank 24 shown and described with references to FIGS. 1B and 1C.

Referring to FIG. 4A, when the cathode-side purging system 116 is in the electrolyzer-on state (i.e., the electrolysis system 110 is operating and/or the electrolyzer stack 112 is energized or operational), hydrogen gas 113 and crossover-deionized water 117B exit the outlets 130, 132 of the cathode side 122 via the cathode-outlet conduit 164 and are delivered to the reservoir 154. The reservoir 154 holds the volume V1 of a stored-deionized water 117D, which may be the crossover-deionized water 117B, a priming-deionized water 117C fed into the reservoir 154 via the priming inlet 168, or a mixture of both.

Meanwhile, the hydrogen outlet 174 of the reservoir 154 directs hydrogen gas 113 and/or excess stored-deionized water 117D out of the reservoir 154 and to the hydrogen collector 178 via the hydrogen conduit 188, as suggested in FIG. 2A and FIG. 4A. The first cathode-side valve 158 is in the closed configuration so that the stored-deionized water 117D is blocked from flowing past the first cathode-side valve 158.

Referring to FIG. 4B, when the cathode-side purging system 116 is in the electrolyzer-off state (i.e., the electrolysis system 110 is shutdown and/or the electrolyzer stack 112 is de-energized or nonoperational), the first cathode-side valve 158 is automatically changed to the open configuration so that the stored-deionized water 117C flows past the first cathode-side valve 158, into the second segment 164B of the cathode-outlet conduit 164 and into the second outlet 132 to fill the cathode side 122. This occurs as soon as the electrolysis system 110 is shutdown and/or the electrolyzer stack 112 is de-energized or nonoperational.

The stored-deionized water 117D fills the cathode side 122 of the electrolyzer stack 112 and therefore "pushes" hydrogen gas 113 out of the cathode side 122 via the first outlet 130. Depending on the volume V1 of the stored-deionized water 117D, the hydrogen gas 113 may move into the reservoir 154, remain within the first, third, and/or fourth segments of the cathode-outlet conduit 164A, 164C, 164D, and or exit the reservoir 154 via the hydrogen outlet 174. Meanwhile, priming-deionized water 117C is delivered to the reservoir 154 via the priming conduit 162 to refill the reservoir 154. Refilling the reservoir 154 ensures that the cathode-side purging system 116 has enough stored-deionized water 117D to fill the cathode 122 if the electrolysis system 110 is shutdown again shortly after restarting the system. When the electrolysis system 110 is restarted and/or the electrolyzer stack is energized or operational, the cathode-side purging system 116 changes back to the electrolyzer-on state (see FIG. 4A).

In the present disclosure, the electrolyzer stack 112 is positioned in a vertical orientation. In other embodiments, the electrolyzer stack 112 may be positioned in a horizontal orientation or inclined. In such embodiments, the cathode-side purging system 116 is still above the electrolyzer stack 112 such that the stored-deionized water 117D can flow into the cathode side 122 by gravity.

In some embodiments, the cathode-side purging system 116 may not include the reservoir 154. Instead, the hydrogen separator tank 186 may be located above the electrolyzer stack 112 in place of the reservoir 154. In other words, in some embodiments, the cathode-side purging system 116 may only include the hydrogen separator tank 186 (e.g., and not the reservoir 154). In such embodiments, the inlet 190 of the hydrogen separator tank 186 is fluidically coupled to the cathode-outlet conduit 164. In such embodiments, the hydrogen separator tank 186 further includes a priming inlet (not shown) fluidically coupled to the priming conduit 162. In such embodiments, the water outlet 192 is fluidically coupled to the cathode-inlet conduit 166 and the cathode-inlet-conduit 166 further includes a water conduit (not shown) located upstream of the valve 158. Alternatively, the hydrogen separator tank 186 may further include a second water outlet (not shown) fluidically coupled to the cathode-inlet conduit 166.

The cathode-side purging system 116 is configured to prolong the presence of, reduce, and/or prevent degradation of the electrolyzer stack 112. Among other factors, degradation of the electrolyzer stack 112 is impacted by the amount of hydrogen gas 113 left on the cathode side 122 after shutdown and/or lack of operation of the electrolysis system 110. Life of the electrolyzer stack 112 is impacted by, among other factors, the highest rate of voltage degradation within the electrolyzer stack 112.

In other words, when the top electrolyzer cell 80T has a first voltage degradation rate R1 (µV/h (microvolts/hour)) and the bottom electrolyzer cell 80B has a second voltage degradation rate R2 (µV/h) that is less than the first voltage degradation rate R1, then the life of the electrolyzer stack 112 will be evaluated based on the first voltage degradation rate R1. As such, there exists a need to lower the voltage degradation rate of each electrolyzer cell 80 in the electrolyzer stack 112. There also exists a need to decrease the difference between the first voltage degradation rate R1 and the second voltage degradation rate R2, so that the degradation rates R1, R2 are more uniform in order to reduce the degradation of the electrolyzer stack 112 and consequently, increase the life of the electrolyzer stack 112 and/or the electrolysis system 110.

A typical electrolysis system known in the art does not include a cathode-side purging system 116. When a typical electrolysis system is shut down, residual hydrogen remains in the cathode side of the electrolyzer stack. This residual hydrogen may oxidize the cathode catalyst, which causes accelerated degradation of the electrolyzer stack. Likewise, the residual hydrogen may cross over to the anode side through the membrane, which also oxidizes the anode catalyst. Such oxidation may further cause additional and/or accelerated degradation of the electrolyzer stack.

The voltage of the top five (5) cells and the bottom five (5) cells of the electrolyzer stack (comprising at or about 200 cells) of a typical electrolysis system during operation (T1), at shutdown (T2), and after shutdown (T3) of the typical electrolysis system reflects the amount of hydrogen that is present in the top 5 and bottom 5 electrolyzer cells. In other words, the higher the voltage, the more hydrogen that is present in the top 5 and bottom 5 electrolyzer cells. The amount of voltage (i.e., the amount of hydrogen) of the top 5 cells and bottom 5 cells illustrates any discrepancy in voltage (i.e. hydrogen) along the height of the stack.

In a typical electrolysis system, the top 5 cells have a voltage between about 1500 mV and 500 mV, including any specific or range of voltages comprised therein, after shutdown T3 of the typical electrolysis system. In other words, after shutdown T3, the top 5 cells have a first amount of lingering hydrogen present in the cathode side of the electrolyzer stack. Meanwhile, the voltage of the bottom 5 cells drops to near, about, or at zero (0) mV rapidly at shutdown T2 of the typical electrolysis system and remains at near, about, or at zero (0) mV after shutdown T3.

In contrast, the electrolysis system 110 including the cathode-side purging system 116 according to the present disclosure has a second amount of lingering hydrogen present in the cathode side 122 of the electrolyzer stack 112 after shutdown T3 that is less than the first amount of lingering hydrogen present in the electrolyzer stack of the electrolysis system without the cathode-side purging system. The top 5 cells 80T and the bottom 5 cells 80B of the electrolyzer stack 112 have a measured voltage during operation (T1), at shutdown (T2), and after shutdown (T3) of the electrolysis system 110. The measured voltage may be obtained by a user, operator, controller, and/or computing device automatically, manually, and/or in real time. The measured voltage of both the top 5 cells 80T and the bottom 5 cells 80B drops near, about, or at zero (0) mV (millivolts) rapidly at shutdown T2 of the electrolysis system 110 and remains at near, about, or at zero (0) mV after shutdown T3. In other words, after shutdown T3, the top 5 cells 80T have the second amount of lingering hydrogen present in the cathode side 122 of the electrolyzer stack 112 that is less than the first amount of lingering hydrogen present in the cathode side of the electrolyzer stack 112 after shutdown T3 of the typical electrolysis system. In such embodiments, the second amount of lingering hydrogen is at or close to no lingering hydrogen.

As such, the cathode-side purging system 116 is able to lower the amount of hydrogen that is present in the top 5 electrolyzer cells 80T at shutdown T2 and after shutdown T3 (e.g., to near, about or at zero (0) mV), as compared to the typical electrolysis system without a cathode side purging system 116 where the top cells retained a first amount of lingering hydrogen (e.g., ranging from about 1500 mV to about 500 mV, including any specific or range of voltages comprised therein).

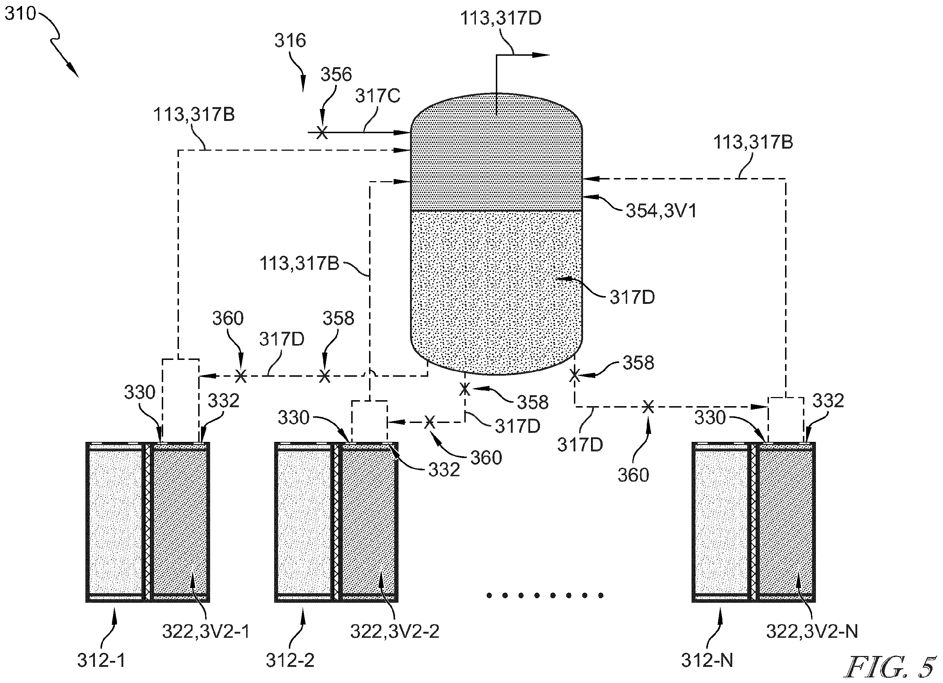

FIG. 5 shows an alternative embodiment of an electrolysis system 310 of the present disclosure. The electrolysis system 310 may include several electrolyzer stacks 312-1, 312-2, 312-N, as shown in FIG. 5. The several electrolyzer stacks 312-1, 312-2, 312-N may only be one or two electrolyzer stacks 312-1, 312-2, or may include any number of stacks represented by N, where N is no more than 10 stacks. The electrolysis system 310 is substantially similar to the electrolysis system 110 shown in FIGS. 2A-4B and described herein. Likewise, the electrolyzer stacks 312-1, 312-2, 312-N are substantially similar to the electrolyzer stack 112. Accordingly, similar reference numbers in the 300 series indicate features that are common between the electrolysis system 310 and electrolyzer stacks 312-1, 312-2, 312-N and the electrolysis system 110 and electrolyzer stack 112. The description of FIGS. 2A-4B is incorporated by reference to apply with FIG. 5, except in instances where there is conflict with the specific description of FIG. 5.

The electrolysis system 310 also includes a cathode-side purging system 316. The cathode-side purging system 316 includes one reservoir 354 configured to store a volume 3V1 of stored-deionized water 317D. The stored-deionized water 317D may comprise priming-deionized water 317C, crossover-deionized water 317B from one or more of the electrolyzer stacks 312-1, 312-2, 312-N, or a combination of both. The volume 3V1 of stored-deionized water 317D is at least a combined holding volume 3V2 of the cathode sides 322 of all of the electrolyzer stacks 312-1, 312-2, 312-N in the electrolysis system 310. For example, if the electrolysis system 310 includes 4 electrolyzer stacks 312-1, 312-2, 312-3, 312-4 and each cathode side 322 has a holding volume 3V2-1, 3V2-2, 3V2-3, 3V2-4 of 27 liters, then the combined holding volume 3V2 is 108 liters and the volume 3V1 of stored-deionized water 317D is at least 108 liters.

The cathode-side purging system 316 is operable between the electrolyzer-on state, the electrolyzer-off state, and a partial electrolyzer-off state. All of the electrolyzer stacks 312-1, 312-2, 312-N are de-energized or nonoperational in the electrolyzer-off state. None of the electrolyzer stacks 312-1, 312-2, 312-N are de-energized or nonoperational in the electrolyzer-on state. In the partial electrolyzer-off state, when at least one but not all of the electrolyzer stacks 312-1, 312-2, 312-N is de-energized or nonoperational, a first cathode-side valve 358 of each de-energized electrolyzer stack 312-1, 312-2, 312-N is changed to the open configuration to direct the stored-deionized water 317D to the respective cathode sides 322 of each de-energized electrolyzer stack 312-1, 312-2, 312-N. Accordingly, the electrolysis system 310 remains operable if less than all of the electrolyzer stacks 312-1, 312-2, 312-N are de-energized. Additionally, degradation of the de-energized electrolyzer stacks 312-1, 312-2, 312-N is prolonged, reduced, and/or prevented with the cathode-side purging system 316.

The present disclosure is further directed to a method for prolonging the presence of, reducing, and/or preventing degradation of the electrolyzer stack 112 or the electrolyzer stacks 312-1, 312-2, 312-N. This method includes providing and/or implementing the electrolysis system 110, 310, as described above. Before powering on the electrolysis system 110 and/or energizing the electrolyzer stack 112 or one or more of the electrolyzer stacks 312-1, 312-2, 312-N, the cathode-side purging system 116, 316 is in the electrolyzer-off state. The reservoir 154, 354 of the cathode-side purging system 116, 316 is filled with priming-deionized water 117C, 317C to provide the stored-deionized water 117D, 317D by opening the priming valve 156, 356. The priming valve 156, 356 may be opened manually or automatically.

In embodiments where the cathode-side purging system 116, 316 is provided with the control system 176 (shown in FIG. 4B), the level sensor 178 detects the volume of stored-deionized water 117D, 317D in the reservoir 154, 354. The memory 184, when executed by the processor 182, compares the detected volume V1, 3V1 of stored-deionized water 117D with a minimum volume. If the detected volume V1, 3V1 is greater than the minimum volume, then the priming valve 156, 356 remains closed, is closed automatically by the control system 176, or closed manually by an operator. If the detected volume V1, 3V1 is less than the minimum volume, then the priming valve 156, 356 remains open, is opened automatically by the control system 176, or opened manually by an operator so that priming-deionized water 117C, 317C fills the reservoir 154, 354 until the minimum volume is reached. In embodiments where the priming valve 156, 356 is manual, the operator may be notified to open or close the priming valve 156, 356 via the control system 176.

When the electrolysis system 110, 310 is powered on or when the electrolyzer stack 112 or one or more of the electrolyzer stacks 312-1, 312-2, 312-N are energized, the cathode-side purging system 116, or 316 of each of the energised electrolyzer stacks 312-1, 312-2, 312-N are configured to be changed to the electrolyzer-on state. As described above, the first cathode-side valve 158, 358 is a normally-open valve, meaning that the first-cathode side valve 158, 358 automatically closes when the electrolysis system 110, 310 is powered on and delivers power to the first cathode-side valve 158, 358 to close.

The first cathode-side valve 158, 358 is changed to the closed configuration to block the stored-deionized water 117D, 317D from flowing past the first cathode-side valve 158, 358 and into the cathode side 122, 322 of the electrolyzer stack 112 or one or more of the electrolyzer stacks 312-1, 312-2, 312-N. At the same time, any deionized water 117D, 317D in the cathode side 122, 322 exits the cathode side 122, 322 via the outlets 130, 132, 330, 332 and into the reservoir 154, 354. The electrolyzer stack 112 or one or more of the electrolyzer stacks 312-1, 312-2, 312-N operates to provide hydrogen gas 113 and crossover-deionized water 117B, 317B on the cathode side 122, 322. The hydrogen gas 113 and crossover-deionized water 117B, 317B is directed out of the outlets 130, 132, 330, 332 and into the reservoir 154, 354.

When the electrolysis system 110, 310 is powered off or when the electrolyzer stack 112 or one or more of the electrolyzer stacks 312-1, 312-2, 312-N are de-energized, the cathode-side purging system 116, or 316 of each of the de-energised electrolyzer stacks 312-1, 312-2, 312-N are changed back to the electrolyzer-off state. The first cathode-side valve 158, 358 is changed to the open configuration to allow the stored-deionized water 117D, 317D to flow past the first cathode-side valve 158, 358 and into the cathode side 122, 322 of the electrolyzer stack 112 or one or more of the electrolyzer stacks 312-1, 312-2, 312-N. The stored-deionized water 117D, 317D pushes hydrogen gas 113 out of the cathode side 122, 322 so that the amount of hydrogen gas 113 on the cathode side 122, 322 when the electrolyzer stack 112 or one or more of the electrolyzer stacks 312-1, 312-2, 312-N is de-energized is minimized. As explained above, hydrogen gas 113 in the electrolyzer stack 112 or one or more of the electrolyzer stacks 312-1, 312-2, 312-N when it is de-energized causes accelerated degradation of the electrolyzer stack 112 or one or more of the electrolyzer stacks 312-1, 312-2, 312-N, including the catalysts 81AC, 81CC.

A person having ordinary skill in the art would appreciate that the method of prolonging the presence of, reducing, and/or preventing degradation of the electrolyzer stack 112 or one or more of the electrolyzer stacks 312-1, 312-2, 312-N may also include use or operation of other components of the electrolysis system 110 or the electrolysis system 310 as described above.

While the cathode-side purging system 116, 316 of the present disclosure is designed to function with little or no controls, some embodiments may include the control system 176 as described above. Another implementation of the control system 176 may be the control system 900 shown in FIG. 6. The control system 900 includes a computing device 902 in communication over a network 916 with other components of the control system 900 including but not limited to a controller 930, one or more power sources 920 in the electrolysis system 110 or the electrolysis system 210, and other components 940 of the electrolysis system 110 or the electrolysis system 210 that determine function and performance. The control system 176 described above may be the control system 900. Likewise, the controller 180 may be the controller 930.

The computing device 902 may be embodied as any type of computation or computer device capable of performing the functions described herein, including, but not limited to, a server (e.g., stand-alone, rack-mounted, blade, etc.), a network appliance (e.g., physical or virtual), a high-performance computing device, a web appliance, a distributed computing system, a computer, a processor-based system, a multiprocessor system, a smartphone, a tablet computer, a laptop computer, a notebook computer, and a mobile computing device.

The illustrative computing device 902 of FIG. 6 may include one or more of an input/output (I/O) subsystem 906, a memory 908, a processor 910, a data storage device 912, a communication subsystem 914, and a display 918 that may be connected to each other, in communication with each other, and/or configured to be connected and/or in communication with each other through wired, wireless and/or power line connections and associated protocols (e.g., Ethernet, InfiniBand^{®}, Bluetooth^{®}, Wi-Fi^{®}, WiMAX, 3G, 4G LTE, 5G, etc.).

The computing device 902 may also include additional and/or alternative components, such as those commonly found in a computer (e.g., various input/output devices). In other embodiments, one or more of the illustrative computing device 902 of components may be incorporated in, or otherwise form a portion of, another component. For example, the memory 908, or portions thereof, may be incorporated in the processor 910.

The processor 910 may be embodied as any type of computational processing tool or equipment capable of performing the functions described herein. For example, the processor 910 may be embodied as a single or multi-core processor(s), digital signal processor, microcontroller, or other processor or processing/controlling circuit. The memory 908 may be embodied as any type of volatile or non-volatile memory or data storage capable of performing the functions described herein.

In operation, the memory 908 may store various data and software used during operation of the computing device 902 such as operating systems, applications, programs, libraries, and drivers. The memory 908 is communicatively coupled to the processor 910 via the I/O subsystem 906, which may be embodied as circuitry and/or components to facilitate input/output operations with the processor 910, the memory 908, and other components of the computing device 902.

For example, the I/O subsystem 906 may be embodied as, or otherwise include, memory controller hubs, input/output control hubs, sensor hubs, host controllers, firmware devices, communication links (i.e., point-to-point links, bus links, wires, cables, light guides, printed circuit board traces, etc.) and/or other components and subsystems to facilitate the input/output operations.

In one embodiment, the memory 908 may be directly coupled to the processor 110, for example via an integrated memory controller hub. Additionally, in some embodiments, the I/O subsystem 906 may form a portion of a system-on-a-chip (SoC) and be incorporated, along with the processor 910, the memory 908, and/or other components of the computing device 902, on a single integrated circuit chip (not shown).

The data storage device 912 may be embodied as any type of device or devices configured for short-term or long-term storage of data such as, for example, memory devices and circuits, memory cards, hard disk drives, solid-state drives, or other data storage devices. The computing device 902 also includes the communication subsystem 914, which may be embodied as any communication circuit, device, or collection thereof, capable of enabling communications between the computing device 902 and other remote devices over the computer network 916.

The components of the communication subsystem 914 may be configured to use any one or more communication technologies (e.g., wired, wireless and/or power line communications) and associated protocols (e.g., Ethernet, InfiniBand^{®}, Bluetooth^{®}, Wi-Fi^{®}, WiMAX, 3G, 4G LTE, 5G, etc.) to effect such communication among and between system components and devices. The controller 930, the power sources 920, the computing device 902, and additional features or components 940 of the vehicle 600 may be connected, communicate with each other, and/or configured to be connected or in communication with each over the network 916 using one or more communication technologies (e.g., wired, wireless and/or power line communications) and associated protocols (e.g., Ethernet, InfiniBand^{®}, Bluetooth^{®}, Wi-Fi^{®}, WiMAX, 3G, 4G LTE, 5G, etc.).

The computing device 902 may also include any number of additional input/output devices, interface devices, hardware accelerators, and/or other peripheral devices. The computing device 902 of the control system 900 of the electrolysis system 110 or the electrolysis system 210 may be configured into separate subsystems for managing data and coordinating communications throughout the electrolysis system 110, 210.

The display 918 of the computing device 902 may be embodied as any type of display capable of displaying digital and/or electronic information, such as a liquid crystal display (LCD), a light emitting diode (LED), a plasma display, a cathode ray tube (CRT), or other type of display device. In some embodiments, the display 918 may be coupled to or otherwise include a touch screen or other input device.

In one embodiment, the controller 930 is in the same computing device 902 as the processor 910. In other embodiments, the controller 930 may include a memory 932, a processor 934, and a communication system 936, as previously described. The memory 184 described above may be the memory 932. Likewise, the processor 182 described above may be the processor 934.

The cathode-side purging system 116 is changeable between an electrolyzer-on state in which the outlet conduit 164 directs some of the hydrogen gas 113 from the cathode side 122 of the electrolyzer stack 112 into the reservoir 154 and an electrolyzer-off state in which the inlet conduit 166 directs the stored water 117D from the reservoir 154 into the second outlet 132 of the cathode side 122 to fill the cathode side 122 of the electrolyzer stack 112 with the stored water 117D so that the remaining hydrogen gas 113 in the cathode side 122 is displaced away from a catalyst 81AC, 81CC of the electrolyzer stack 112 and into the outlet conduit 164 via the first outlet 130.

The features illustrated or described in connection with one exemplary embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

The above embodiments are described in sufficient detail to enable those skilled in the art to practice what is claimed and it is to be understood that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first," "second," "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of" or "consists of" refers to a compound, composition, formulation, or method that excludes the presence of any additional elements, components, or method steps. The term "consisting of" also refers to a compound, composition, formulation, or method of the present disclosure that excludes the presence of any additional elements, components, or method steps.

The phrase "consisting essentially of" or "consists essentially of" refers to a composition, compound, formulation, or method that is inclusive of additional elements, components, or method steps that do not materially affect the characteristic(s) of the composition, compound, formulation, or method. The phrase "consisting essentially of" also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. An electrolysis system comprising:
an electrolyzer stack having an anode side configured to convert water into oxygen gas and hydrogen protons and a cathode side configured to convert the hydrogen protons into hydrogen gas,
a water source fluidically coupled to an inlet of the anode side of the electrolyzer stack to provide the water to the anode side, and
a cathode-side purging system that is configured to be transitioned between an electrolyzer-on state and an electrolyzer-off state and includes a water reservoir, an outlet conduit fluidically coupled between a first outlet and a second outlet of the cathode side and the water reservoir, and an inlet conduit fluidically coupled between the water reservoir and the second outlet of the cathode side.

2. The electrolysis system of claim 1, wherein the cathode-side purging system is configured to collect the water from the cathode side of the electrolyzer stack to provide at least a portion of a stored water in the water reservoir when the cathode-side purging system is in the electrolyzer-on state.

3. The electrolysis system of claim 1 or 2, wherein the electrolyzer stack is positioned above a floor and the cathode-side purging system is above the electrolyzer stack relative to the floor.

4. The electrolysis system of claim 1, 2 or 3, wherein the water reservoir is configured to store a volume of a stored water, the volume of the stored water being at least equal to a holding volume of the cathode side of the electrolyzer stack.

5. The electrolysis system of claim 4, wherein the volume of the stored water is at least two times the holding volume of the cathode side of the electrolyzer stack.

6. The electrolysis system of any one of claims 1 to 5, wherein the cathode-side purging system further includes a valve coupled to the inlet conduit to selectively direct a stored water from the reservoir, the valve being changeable between a closed configuration in which the stored water is blocked from flowing past the valve and an open configuration in which the stored water can flow past the valve and into the cathode side of the electrolyzer stack.

7. The electrolysis system of claim 6, wherein the valve is a normally-open control valve that is configured to automatically change between the closed configuration when the cathode-side purging system is in the electrolyzer-on state and the open configuration when the cathode-side purging system is in electrolyzer-off state.

8. The electrolysis system of any one of claims 1 to 7, wherein the cathode-side purging system further includes a priming conduit fluidically coupled to the reservoir to deliver a priming water to the reservoir to provide at least a portion of a stored water in the reservoir when the cathode-side purging system is in the electrolyzer-off state.

9. A purging system for an electrolyzer stack comprising:
a reservoir configured to store a volume of a stored water,
an outlet conduit fluidically coupled between a first and second outlet of a cathode side of an electrolyzer stack and the reservoir, and
an inlet conduit fluidically coupled between the reservoir and the outlet conduit, the inlet conduit having a valve that is changeable from a closed configuration and an open configuration.

10. The purging system of claim 9, wherein the outlet conduit includes a first segment extending between the first outlet and a meeting point, a second segment extending between the second outlet and the inlet conduit, a third segment extending between the inlet conduit and the meeting point, and a fourth segment extending between the meeting point and the reservoir.

11. The purging system of claim 9 or 10, wherein the valve is a normally-open control valve that is configured to automatically change between the closed configuration when the purging system is an electrolyzer-on state and the open configuration when the purging system is in an electrolyzer-off state.

12. The purging system of claim 9, 10 or 11, wherein the purging system further includes a priming conduit fluidically coupled to the reservoir to deliver priming water to the reservoir to provide at least a portion of the stored water.

13. The purging system of any one of claims 9 to 12, wherein the volume of the stored water is at least a holding volume of the cathode side of the electrolyzer stack.

14. A method for reducing degradation of an electrolyzer stack, the method comprising:
operating an electrolyzer stack, wherein the electrolyzer stack is located above a floor and includes an anode side and a cathode side, the anode side providing a crossover water that is directed to the cathode side,
positioning a cathode-side purging system above the electrolyzer stack relative to the floor, the cathode-side purging system including a reservoir for holding a stored water, an outlet conduit fluidically coupled between a first outlet and a second outlet of the cathode side and the reservoir, and an inlet conduit fluidically coupled between the reservoir and the second outlet of the cathode side,
operating the cathode-side purging system in an electrolyzer-on state where hydrogen gas and the crossover water is directed from the cathode side and into the reservoir via the outlet conduit, wherein at least a portion of the stored water is the crossover water,
de-energizing the electrolyzer stack, and
upon de-energizing the electrolyzer stack, operating the cathode-side purging system in an electrolyzer-off state.

15. The method of claim 14, further comprising:
priming the cathode-side purging system with a priming water to provide the stored water when the cathode-side purging system is in the electrolyzer-off state so that a volume of the stored water is at least equal to a holding volume of the cathode side of the electrolyzer stack when the cathode-side purging system is changed to the electrolyzer-on state.
